# EUROPÄISCHE PATENTSCHRIFT

(11) **EP 0 645 567 B1**
(45) Veröffentlichungstag und Bekanntmachung des Hinweises auf die Patenterteilung: **06.11.1996**
(21) Anmeldenummer: 94112985.0
(22) Anmeldetag: 19.08.1994
(51) Int. Cl.: F16K 21/10

(54) **Selbstschliessende Absperrarmatur**
Self-closing valve
Robinet à fermeture automatique

(30) Priorität: 27.08.1993 DE 9312906 U
(43) Veröffentlichungstag der Anmeldung: 29.03.1995
(73) Patentinhaber: CHEMAT GmbH Armaturen für Industrie- und Nuklearanlagen, D-77871 Renchen (DE)
(72) Erfinder: Braig, Hans, F-67720 Hoerdt (FR)
(74) Vertreter: Betten & Resch

(56) Entgegenhaltungen:
- DE-B- 1 031 070
- DE-C- 3 503 077
- US-A- 2 354 366

## Beschreibung

Die Erfindung betrifft eine handbetriebene selbstschließende Absperrarmatur wie Kugelhahn, Kükenhahn, Absperrklappe u. dgl., mit einer mit dem Schaltorgan der Absperrarmatur drehfest verbundenen Schaltwelle, einem mit der Schaltwelle drehfest verbundenen Handhebel und einer bezüglich des Armaturengehäuses ortsfest angeordneten und mit der Schaltwelle zusammenwirkenden Rückstellvorrichtung zum gedämpften selbsttätigen Rückführen des Schaltorgans aus seiner geöffneten in seine geschlossene Stellung, wobei die Rückstellvorrichtung ein fluiddichtes Gehäuse, in das die Schaltwelle eingreift, aufweist.

Aufgrund strenger Sicherheitsvorschriften werden verstärkt Anstrengungen unternommen, beim Einsatz von handbetätigten Absperrarmaturen in Leitungen oder Behältern mit extrem explosiven oder hochgiftigen Fluiden Maßnahmen zu ergreifen, um bei unvorhergesehenen Zwischenfällen Gefahren für die Bedienperson und die Umgebung zu verhindern. Gerade beim manuellen Ab- oder Umfüllen derart gefährlicher Medien kann durch plötzlich auftretende Dämpfe oder durch einen Schwächeanfall der Bedienperson eine Situation entstehen, in der diese nicht mehr in der Lage ist, den Handhebel in die geschlossene Stellung zurückzubewegen, um ein weiteres, unkontrolliertes Ausströmen zu verhindern.

Aus dem DE-DM 75 25 776 ist eine selbstschließende Absperrarmatur bekannt, bei der das Ventil konkret für den momentanen Flüssigkeitsbedarf öffnet und beim Entfernen der Hand selbsttätig über einen Druckfeder schließt. Hierbei erfolgt die Rückstellung schlagartig, wodurch eine mögliche Gefahrensituation für die Bedienperson und die Umgebung aufgrund der Verletzungsgefahr, die sich durch das Züruckschnellen des Hebelarms des Handhebels ergibt, entstehen kann. Durch den Schock des schlagartig gebremsten Handhebels wird die Armatur unnötig belastet.

Aus der DE-PS 35 03 077 ist eine handbetriebene selbstschließende Absperrarmatur der eingangs genannten Gattung bekannt, bei der die Rückstellvorrichtung eine Drehfeder und ein mit der Schaltwelle verbundenes Dämpfungsteil umfaßt, wobei Drehfeder und Dämpfungsteil in einem armaturengehäusefesten Gehäuse angeordnet sind und wobei die Drehfeder mit ihrem unteren Bereich am Dämpfungsteil und mit ihrem oberen Bereich am Gehäuse befestigt ist. Die bekannte Rückstellvorrichtung ist jedoch nur für relativ kleine Armaturen geeignet.

Der Erfindung liegt die Aufgabe zugrunde, eine handbetriebene, selbstschließende Absperrarmatur zu schaffen, welche eine alternative Lösung für ein selbsttätiges, gedämpftes Schließen der Absperrarmatur angibt, u.a. wenn die Bedienperson nicht mehr in der Lage ist, den Handhebel selbst zu schließen. In diesem Fall soll der weitere Durchfluß durch die Absperrarmatur durch gedämpftes Schließen der Absperrarmatur unterbrochen werden.

Diese Aufgabe wird erfindungsgemäß im wesentlichen dadurch gelöst, daß die Rückstellvorrichtung folgendes aufweist:
- eine Kolbeneinrichtung mit mindestens einem im Gehäuse verschieblich gelagerten Kolben,
- eine Getriebeeinrichtung zum Übersetzen der Drehbewegung der Schaltwelle in eine lineare Bewegung des mindestens einen Kolbens,
- mindestens einen ersten Raum, der in Bewegungsrichtung des mindestens einen Kolbens gesehen vor dem Kolben zwischen Kolben und Gehäuse angeordnet ist,
- einen hinter dem mindestens einen Kolben angeordneten zweiten Raum,
- eine in mindestens einem der Räume angeordnete, beim manuellen Öffnen des Schaltorgans vorspannbare Federeinrichtung,
- ein fluides Medium innerhalb des Gehäuses, und
- eine Drosseleinrichtung zum gedrosselten Zuführen des Mediums in den sich beim selbsttätigen Rückführen vergrößernden Raum bzw. zum gedrosselten Abführen des Mediums aus dem sich beim selbständigen Rückführen verkleinernden Raum.

Beim manuellen Öffnen der Absperrarmatur wird somit gleichzeitig die in der Rückstellvorrichtung angeordnete Federeinrichtung vorgespannt; sobald der Handhebel von der Bedienperson in der geöffneten oder einer teilweise geöffneten Stellung losgelassen wird, drückt die vorgespannte Federeinrichtung den bzw. die Kolben wieder in die Ausgangsstellung und damit das Schließorgan der Absperrarmatur wieder in die geschlossene Stellung, wobei aufgrund der Drosseleinrichtung die Rückstellbewegung nicht schlagartig bzw. ruckartig erfolgt, sondern vielmehr langsam bzw. gedämpft. Hierdurch wird eine Verletzungsgefahr vermieden und weiterhin aufgrund der Vermeidung schlagartiger Bewegungen das Material geschont.

Die erfindungsgemäße Rückstellvorrichtung kann mit Vorteil auch in Anlagen verwendet werden, bei denen Produktleitungen entlüftet werden müssen, nachdem es sich gezeigt hat, daß des öfteren vergessen wurde, die Entlüftungshähne wieder zu schließen, so daß anschließend unkontrolliert das Produkt ausgetreten ist; dies ist bei Verwendung der erfindungsgemäßen Vorrichtung nicht mehr möglich.

Ein weiterer Vorteil der erfindungsgemäßen Vorrichtung besteht darin, daß sie in einfachster Weise auf die ohnehin vorhandene Schaltwelle der Absperrarmatur (auch nachträglich) aufgesetzt werden kann, wobei das Gehäuse nur noch an geeignete Stelle festgeschraubt zu werden braucht.

In bevorzugter Ausführungsform der Erfindung ist die Rückstellvorrichtung nach Art eines einfach wirkenden pneumatischen Schwenkantriebes mit Federrückstellung ausgebildet (DIN 3337/ISO 5211-NAMUR), wie er aus dem Stand der Technik bekannt ist. Im Gegensatz zu den bekannten pneumatischen Schwenkantrieben erfolgt bei der erfindungsgemäßen Rückstellvorrichtung selbstverständlich keine Fremdenergiezufuhr.

Obwohl bei der erfindungsgemäßen Rückstellvorrichtung als fluides Medium grundsätzlich auch ein Gas, insbesondere Luft, verwendbar ist, wird in bevorzugter Ausbildung der Erfindung als fluides Medium eine Flüssigkeit, insbesondere Hydrauliköl, gewählt, nachdem hierbei ein gleichmäßigerer Bewegungsablauf bei der Rückführung des Schaltorgans in die geschlossene Stellung erzielt werden kann. Insbesondere bei Verwendung von Flüssigkeit als fluides Medium, also bei einer hydraulischen Dämpfung, besteht die Drosseleinrichtung vorzugsweise von einer in mindestens einem Kolben vorgesehenen Durchgangsöffnung, die den mindestens einen ersten Raum mit dem zweiten Raum verbindet; in zweckmäßiger Weiterbildung der Erfindung kann in der Durchgangsöffnung ein gegebenenfalls einstellbares Drosselrückschlagventil angeordnet sein, welches sich beim Öffnen der Armatur öffnet, beim selbständigen Schließen jedoch lediglich ein stark gedrosseltes Durchströmen zuläßt.

Im Falle einer pneumatischen Dämpfung kann die Drosselung wie vorstehend erläutert ausgebildet sein. Bei Verwendung von Luft als fluidem Medium kann demgegenüber die Durchgangsöffnung im Kolben entfallen und es können im Gehäuse entsprechende Durchgangsöffnungen mit Drosselventil bzw. Drosselrückschlagventil vorgesehen sein, so daß die Räume in geeigneter Weise mit der Außenatmosphäre verbunden werden.

Die Federeinrichtung wird zweckmäßigerweise von mindestens einer Spiralfeder gebildet, vorzugsweise von mehreren Spiralfedern, die beim Öffnen der Armatur komprimiert werden. Durch Wegnehmen oder Hinzufügen von Spiralfedern ist es möglich, die Rückstellkraft der zur Verwendung kommenden Armatur exakt anzupassen.

Im folgenden werden mehrere Ausführungsbeispiele der Erfindung anhand der Zeichnung näher erläutert. In der Zeichnung zeigen:
- Figur 1: eine Seitenansicht einer erfindungsgemäßen handbetriebenen selbstschließenden Absperrarmatur mit Rückstellvorrichtung,
- Figur 2: eine Seitenansicht der Absperrarmatur gemäß Figur 1 in Richtung des Pfeiles II gemäß Figur 1,
- Figur 3: eine geschnittene Ansicht der Rückstellvorrichtung gemäß Figur 2 von oben, und
- Figur 4: eine Schnittansicht gemäß Figur 3 einer alternativen Ausführungsform einer Rückstellvorrichtung gemäß Figur 2 mit Doppelkolben.

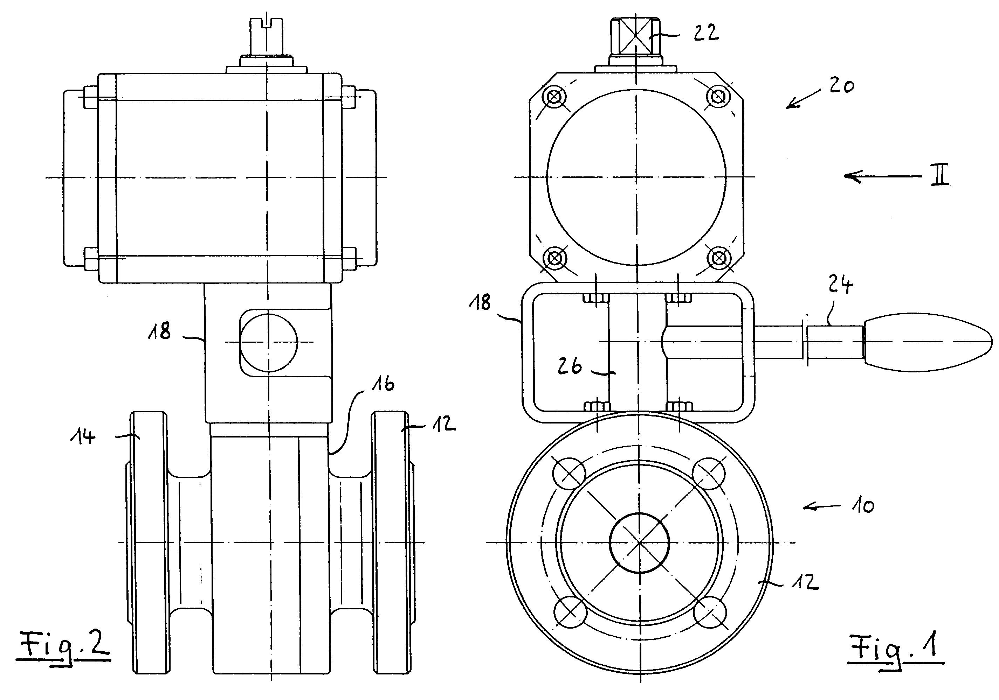

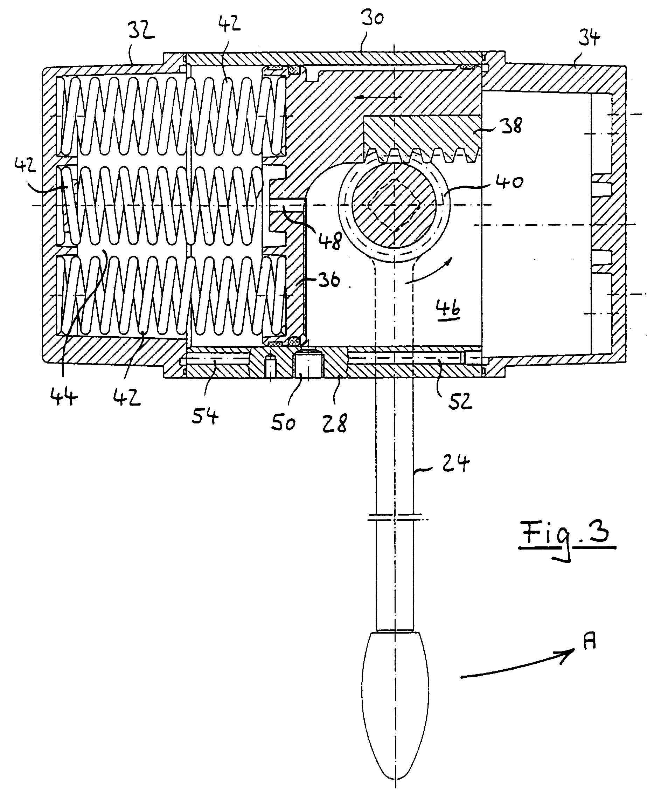

Zunächst wird auf das Ausführungsbeispiel gemäß Figuren 1 bis 3 Bezug genommen. Die hier beispielsweise dargestellte Armatur ist ein insgesamt mit der Bezugsziffer 10 bezeichneter Kugelhahn mit Anschlußflanschen 12, 14. Am Armaturengehäuse 16 ist eine Verbindungsbrücke 18 festgeschraubt. Auf der Verbindungsbrücke 18 ist die insgesamt mit der Bezugsziffer 20 bezeichnete Rückstellvorrichtung angeschraubt. Eine Schaltwelle 22 des nicht dargestellten Schaltorgans des Kugelhahns 10 erstreckt sich vom Kugelhahn 10 über die Verbindungsbrücke 18 durch die Rückstellvorrichtung 20 hindurch. Die Schaltwelle 22 muß selbstverständlich nicht einstückig sein, sondern kann aus mehreren koaxialen, antriebsmäßig miteinander verbundenen Wellenstücken zusammengesetzt sein. Mit der Bezugsziffer 24 ist ein Handhebel zum manuellen Schalten der Armatur und mit der Bezugsziffer 26 eine Verbindungsnuß bezeichnet.

Der Handhebel 24 ist um 90 Grad zwischen einer Öffnungsstellung und einer Schließstellung verschwenkbar, wobei beim Verschwenken des Handhebels das Schaltorgan des Kugelhahns über die Schaltwelle 22 ebenfalls um 90 Grad zwischen einer Öffnungsstellung und einer Schließstellung verschwenkt wird. In den Figuren ist die Schließstellung des Handhebels dargestellt.

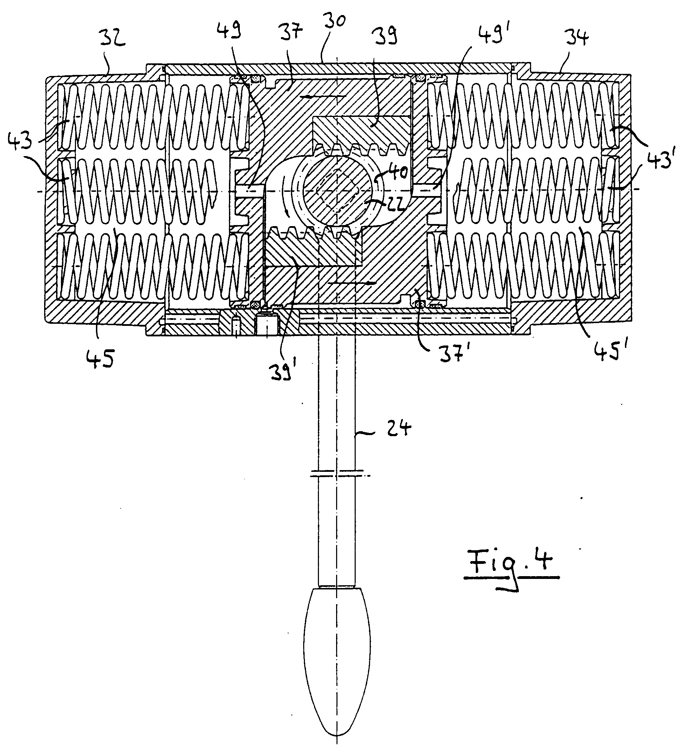

Zur Erläuterung des Aufbaus der Rückstellvorrichtung 20 wird nunmehr auf Figur 3 Bezug genommen. Es sei vorangeschickt, daß die Rückstellvorrichtung 20 insgesamt im wesentlichen nach Art eines einfach wirkenden pneumatischen Schwenkantriebes mit Federrückstellung ausgebildet ist, wie er aus dem Stand der Technik bekannt ist, jedoch insbesondere ohne die dort vorgesehenen Anschlüsse für Druckluft, statt dessen mit einem Dämpfungsmedium und einer Drosseleinrichtung.

Die Rückstellvorrichtung umfaßt ein Gehäuse 28, welches sich aus einem beidseitig offenen Gehäusemittelteil 30 und zwei beidseitig an das Gehäusemittelteil 30 anschließenden Deckelteilen 32 und 34 zusammensetzt. Die Deckelteile 32 und 34 sind an das Gehäusemittelteil 30 angeschraubt und mit diesem hermetisch dicht verbunden. Durch das Gehäusemittelteil 30 tritt die Schaltwelle 22 senkrecht zur Längsachse des Gehäusemittelteils 30 hindurch, wobei die beiden Schaltwellendurchgänge im Gehäuse in geeigneter Weise fluiddicht abgedichtet sind.

Im Gehäusemittelteil 30 ist ein Kolben 36 in Längsrichtung des Kolbens verschieblich gelagert, wobei der Kolben 36 fluiddicht an der Innenwandung des Gehäusemittelteils 30 anliegt. Der Kolben 36 ist an seiner in Figur 3 rechts dargestellten Rückseite mit einem Zahnsegment 38 verbunden, welches mit einem mit der Schaltwelle 22 verbundenen, umlaufenden Zahnabschnitt 40 kämmt. Bei Drehung der Schaltwelle 22 wird demgemäß der Kolben 36 in entsprechende Richtung linear bewegt.

Zwischen der Vorderseite des Kolbens 36 und der Stirnwandung des Deckelteils 32 sind mehrere Spiralfedern 42 angeordnet, welche mittels auf der Kolbenvorderseite und an der Innenseite der Stirnwandung des Deckels ausgebildeter Vertiefungen in ihrer Position gehalten werden. Um die Rückstellkraft des so gebildeten Federpakets dem jeweiligen Anwendungszweck, d.h. der jeweils zur Verwendung kommenden Armatur exakt anpassen zu können, kann die Anzahl der Federn 42 variiert werden bzw. es können Federn mit unterschiedlicher Spannkraft eingesetzt werden.

Der Kolben 36 teilt das Innere des Gehäuses 28 in zwei Räume auf, nämlich in einen ersten Raum 44, der auf der Vorderseite des Kolbens gelegen ist, und einen zweiten Raum 46, der auf der Rückseite des Kolbens gelegen ist. In beiden Räumen 44, 46 befindet sich Hydrauliköl. Im Kolben 36 ist eine Durchgangsöffnung 48 ausgebildet, welche den ersten Raum und den zweiten Raum verbindet. Diese Durchgangsöffnung 48 wirkt bei der Bewegung des Kolbens 36 als Drossel. Gegebenenfalls kann in der Durchgangsöffnung 48 ein nicht dargestelltes Drosselrückschlagventil angeordnet sein, welches eine vergleichsweise wenig gedrosselte Strömung von Hydrauliköl vom Raum 44 in den Raum 46 zuläßt, eine Strömung von Hydrauliköl vom Raum 46 in den Raum 44 jedoch stark drosselt.

Die Funktionsweise der vorstehend beschriebenen Vorrichtung ist nun wie folgt:

Figuren 1 bis 3 zeigen die Schließstellung des Handhebels 24, in der sich das Schaltorgan des Kugelhahns ebenfalls in Schließstellung befindet und der Kolben 36 der Rückstellvorrichtung in seiner rechten, zurückgezogenen Anschlagsposition ist. Zum Öffnen der Absperrarmatur wird der Handhebel 24 in der Darstellung gemäß Figur 3 nach rechts in Pfeilrichtung A um 90 Grad verschwenkt, wodurch die Schaltwelle 22 ebenfalls um 90 Grad verschwenkt wird. Hierdurch wird einerseits das Schaltorgan in seine Öffnungsposition geschwenkt und andererseits wird der Kolben 36 über den Zahnabschnitt 40 der Schaltwelle und das Zahnsegment 38 in Pfeilrichtung nach links in eine linke Endposition verschoben. Hierbei fließt einerseits Hydrauliköl vom Raum 44 durch die Durchgangsöffnung 48 bzw. ein hier angeordnetes Drosselrückschlagventil in den Raum 46 und gleichzeitig werden die Spiralfedern 42 vorgespannt.

Wird nun der Handhebel 24 von der Bedienperson losgelassen, bevor er sich wieder in seiner Ausgangsposition befindet, so wird der Kolben 36 aufgrund der Vorspannung des Federpakets selbsttätig in seine Ausgangslage zurückgeführt, wodurch die Schaltwelle 22 entsprechend gedreht und das Schaltorgan wieder in seine Schließstellung zurückgeführt wird. Diese Zurückführung erfolgt jedoch nicht schlagartig, sondern gedämpft, nach dem bei der Schließbewegung Hydraulikflüssigkeit gedrosselt vom Raum 46 durch die Durchgangsöffnung 48 bzw. ein hier angeordnetes Drosselrückschlagventil hindurch in den Raum 44 fließt und die Bewegung des Kolbens 36 somit dämpft.

Mit der Bezugsziffer 50 ist eine Öffnung vorgesehen, die über Kanäle 52, 54 den Raum 44 bzw. 46 mit der Außenatmosphäre verbindet. Im Falle der vorstehend beschriebenen hydraulischen Dämpfung kommen diese Öffnung und diese Kanäle in Fortfall bzw. sind verschlossen. Sie kommen vielmehr bei einer pneumatischen Dämpfung mittels Luft zum Einsatz, wobei auch hier zusätzlich geeignete Drosselventile bzw. Drosselrückschlagventile vorgesehen sein können. Im Falle einer pneumatischen Dämpfung mittels Luft kann die Durchgangsöffnung 48 im Kolben 36 fortfallen.

Im Falle einer pneumatischen Dämpfung mittels eines im Gehäuse 28 eingeschlossenen Gases ist hingegen wieder die Durchgangsöffnung 48 gegebenenfalls mit Drosselrückschlagventil vorgesehen und die Öffnung 50 sowie die Kanäle 52, 54 kommen in Fortfall.

Das weitere Ausführungsbeispiel gemäß Figur 4 unterscheidet sich vom vorstehend beschriebenen Ausführungsbeispiel lediglich dadurch, daß die Rückstellvorrichtung anstelle des in Figur 3 dargestellten Einkolbensystems ein Doppelkolbensystem umfaßt. Dementsprechend sind hier zwei gegensinnig verschiebliche Kolben 37, 37' vorgesehen, die mit gegenüberliegenden Zahnsegmenten 39, 39' an gegenüberliegenden Seiten mit dem Zahnabschnitt 40 der Schaltwelle 22 in Eingriff stehen. Dementsprechend sind auch zwei Federpakete 43, 43' und zwei erste Räume 45, 45' sowie in jedem Kolben eine Durchgangsöffnung 49, 49' vorgesehen. Die Funktionsweise entspricht im übrigen der Funktionsweise des ersten Ausführungsbeispiels.

### Bezugszeichenliste

- 10: Kugelhahn
- 12: Anschlußflansch
- 14: Anschlußflansch
- 16: Armaturengehäuse
- 18: Verbindungsbrücke
- 20: Rückstellvorrichtung
- 22: Schaltwelle
- 24: Handhebel
- 26: Verbindungsnuß
- 28: Gehäuse
- 30: Gehäusemittelteil
- 32: Deckelteil
- 34: Deckelteil
- 36: Kolben
- 37, 37': Kolben
- 38: Zahnsegment
- 39, 39': Zahnsegmente
- 40: Zahnabschnitt
- 42: Spiralfedern
- 43, 43': Federpakete
- 44: erster Raum
- 45, 45': erste Räume
- 46: zweiter Raum
- 48: Durchgangsöffnung
- 49, 49': Durchgangsöffnungnen
- 50: Öffnung
- 52: Kanal
- 54: Kanal

## Patentansprüche

1. Handbetriebene selbstschließende Absperrarmatur (10) wie Kugelhahn, Kükenhahn, Absperrklappe u. dgl. mit einer mit dem Schaltorgan der Absperrarmatur drehfest verbundenen Schaltwelle (22), einem mit der Schaltwelle drehfest verbundenen Handhebel (24) und einer bezüglich des Armaturengehäuses (16) ortsfest angeordneten und mit der Schaltwelle zusammenwirkenden Rückstellvorrichtung (20) zum gedämpften selbsttätigen Rückführen des Schaltorgans aus seiner geöffneten in seine geschlossene Stellung, wobei die Rückstellvorrichtung ein fluiddichtes Gehäuse (28), in das die Schaltwelle (22) eingreift, aufweist dadurch gekennzeichnet, daß die Rückstellvorrichtung weiter folgendes aufweist:
- eine Kolbeneinrichtung (36; 37, 37') mit mindestens einem im Gehäuse (28) verschiedlich gelagerten Kolben,
- eine Getriebeeinrichtung (38, 40; 39, 39', 40) zum Übersetzen der Drehbewegung der Schaltwelle (20) in eine lineare Bewegung des mindestens einen Kolbens (36; 37, 37'),
- mindestens einen ersten Raum (44; 45, 45'), der in Bewegungsrichtung des mindestens einen Kolbens gesehen vor dem Kolben zwischen Kolben und Gehäuse angeordnet ist,
- einen hinter dem mindestens einen Kolben (36; 37, 37') angeordneten zweiten Raum (46),
- eine in mindestens einem (44; 45, 45') der Räume angeordnete, beim manuellen Öffnen des Schaltorgans spannbare Federeinrichtung (42, 43, 43'),
- ein fluides Medium innerhalb des Gehäuses (28), und
- eine Drosseleinrichtung (48; 50, 52, 54) zum gedrosselten Zuführen des Mediums in den sich beim selbsttätigen Rückführen vergrößernden Raum (44; 54, 54') bzw. zum gedrosselten Abführen des Mediums aus dem sich beim selbständigen Rückführen verkleinernden Raum (46).

2. Absperrarmatur nach Anspruch 1, dadurch gekennzeichnet, daß die Rückstellvorrichtung (20) nach Art eines einfach wirkenden pneumatischen Schwenkantriebs mit Federrückstellung ausgebildet ist.

3. Absperrarmatur nach Anspruch 1 oder 2, dadurch gekennzeichnet, daß das fluide Medium eine Flüssigkeit, insbesondere Hydrauliköl ist.

4. Absperrarmatur nach Anspruch 1 oder 2, dadurch gekennzeichnet, daß das fluide Medium ein Gas, insbesondere Luft ist.

5. Absperrarmatur nach einem der vorhergehenden Ansprüche, dadurch gekennzeichnet, daß die Drosseleinrichtung von einer im mindestens einen Kolben (36 bzw. 37, 37') vorgesehenen Durchgangsöffnung (48 bzw. 49, 49') gebildet ist, die den mindestens einen ersten Raum (44 bzw. 45, 45') mit dem zweiten Raum (46) verbindet.

6. Absperrarmatur nach Anspruch 5, dadurch gekennzeichnet, daß in der Durchgangsöffnung (48; 49, 49') ein gegebenenfalls einstellbares Drosselrückschlagventil angeordnet ist.

7. Absperrarmatur nach Anspruch 4, dadurch gekennzeichnet, daß im Gehäuse (28) mindestens ein Drosselventil bzw. Drosselrückschlagventil vorgesehen ist, welches mindestens einen der Räume (44 bzw. 45, 45'; 46) mit der Außenatmosphäre verbindet.

8. Absperrarmatur nach einem der vorhergehenden Ansprüche, dadurch gekennzeichnet, daß die Federeinrichtung (42; 43, 43') von mindestens einer Spiralfeder gebildet wird.

9. Absperrarmatur nach Anspruch 8, dadurch gekennzeichnet, daß mehrere Spiralfedern (42, 43, 43') vorgesehen sind.

## Claims

1. Manually-operated self-closing shut-off valve (10), such as a ball valve, tap cock, butterfly valve and the like, having a control shaft (22) which is connected fixedly in terms of rotation to the control element of the shut-off valve, a lever (24) which is connected fixedly in terms of rotation to the control shaft, and a restoring arrangement (20), arranged fixedly in terms of location with respect to the valve housing (16) and interacting with the control shaft, for the damped, automatic return of the control element from its open position into its closed position, the restoring arrangement having a fluid-tight housing (28), into which the control shaft (22) engages, characterized in that the restoring arrangement furthermore exhibits the following features:
- a piston device (36; 37, 37') with at least one piston mounted displaceably in the housing (28),
- a transmission device (38, 40; 39, 39', 40) for transferring the rotary motion of the control shaft (22) into a linear motion of the at least one piston (36; 37, 37'),
- at least one first chamber (44; 45, 45') which, seen in the direction of movement of the at least one piston, is arranged in front of the piston between the piston and the housing,
- a second chamber (46) arranged behind the at least one piston (36; 37, 37'),
- a spring device (42, 43, 43') which is arranged in at least one (44; 45, 45') of the chambers and can be compressed when the control element is opened manually,
- a fluid medium inside the housing (28), and
- a restrictor device (48; 50, 52, 54) for restricting the supply of the medium into the chamber (44; 54, 54') increasing in size during the automatic return or for restricting the discharge of the medium from the chamber (46) decreasing in size during the automatic return.

2. Shut-off valve according to Claim 1, characterized in that the restoring arrangement (20) is designed in the manner of a simply operating pneumatic part-turn valve actuator with spring return.

3. Shut-off valve according to Claim 1 or 2, characterized in that the fluid medium is a liquid, in particular hydraulic oil.

4. Shut-off valve according to Claim 1 or 2, characterized in that the fluid medium is a gas, in particular air.

5. Shut-off valve according to one of the preceding claims, characterized in that the restrictor device is formed by a through-opening (48 or 49, 49') provided in the at least one piston (36 or 37, 37'), which through-opening connects the at least one first chamber (44 or 45, 45') to the second chamber (46).

6. Shut-off valve according to Claim 5, characterized in that an optionally adjustable throttle non-return valve is arranged in the through-opening (48; 49, 49').

7. Shut-off valve according to Claim 4, characterized in that at least one throttle valve or throttle non-return valve is provided in the housing (28), which valve connects at least one of the chambers (44 or 45, 45'; 46) to the external atmosphere.

8. Shut-off valve according to one of the preceding claims, characterized in that the spring device (42; 43, 43') is formed by at least one coil spring.

9. Shut-off valve according to Claim 8, characterized in that a plurality of coil springs (42, 43, 43') are provided.

## Revendications

1. Robinet d'arrêt manuel à fermeture automatique (10) tel que robinet à boisseau sphérique, robinet à noix, clapet d'arrêt et semblables, avec un axe de commande (22) relié de façon solidaire en rotation avec l'organe de commande du robinet d'arrêt, un levier à main (24) relié de façon solidaire en rotation avec l'axe de commande et un dispositif de rappel (20) disposé fixe par rapport au boîtier de robinet (16) et coopérant avec l'axe de commande pour le rappel automatique amorti de l'organe de commande de sa position ouverte à sa position fermée, le dispositif de rappel présentant un boîtier étanche (28) dans lequel l'axe de commande (22) s'enclenche, caractérisé en ce que le dispositif de rappel présente en outre les caractéristiques suivantes :
- un dispositif à pistons (36; 37, 37') avec au moins un piston, placé(s) différemment dans le boîtier (28) ;
- un dispositif d'engrenage (38, 40; 39, 39', 40) pour la transmission de la rotation de l'axe de commande (20) en un mouvement linéaire dudit au moins un piston (36; 37, 37') ;
- au moins un premier compartiment (44; 45, 45') qui, vu dans le sens du mouvement dudit au moins un piston, est disposé devant le piston, entre le piston et le boîtier ;
- un deuxième compartiment (46) disposé derrière ledit au moins un piston (36; 37, 37') ;
- un dispositif à ressorts (42, 43, 43') disposé dans au moins un (44; 45, 45') des compartiments et qui se tend lors de l'ouverture manuelle de l'organe de commande ;
- un milieu fluide à l'intérieur du boîtier (28), et
- un dispositif d'étranglement (48; 50, 52, 54) pour l'introduction régulée du milieu dans le compartiment qui s'agrandit lors du rappel automatique (44; 54, 54') ou bien pour l'évacuation régulée du milieu hors du compartiment (46) qui se réduit lors du rappel automatique.

2. Robinet d'arrêt selon la revendication 1, caractérisé en ce que le dispositif de rappel (20) est conçu comme un servomoteur à fraction de tour pneumatique à effet simple avec un rappel à ressorts.

3. Robinet d'arrêt selon la revendication 1 ou 2, caractérisé en ce que le milieu fluide est un liquide, en particulier de l'huile hydraulique.

4. Robinet d'arrêt selon la revendication 1 ou 2, caractérisé en ce que le milieu fluide est un gaz, en particulier de l'air.

5. Robinet d'arrêt selon l'une des revendications précédentes, caractérisé en ce que le dispositif d'étranglement est formé d'un trou de passage (48 ou 49, 49') prévu dans au moins un piston (36 ou 37, 37'), trou de passage qui relie ledit au moins un premier compartiment (44 ou 45, 45') avec le deuxième compartiment (46).

6. Robinet d'arrêt selon la revendication 5, caractérisé en ce qu'un clapet anti-retour avec étranglement, réglable le cas échéant, est disposé dans le trou de passage (48; 49, 49').

7. Robinet d'arrêt selon la revendication 4, caractérisé en ce qu'il est prévu, dans le boîtier (28), au moins une soupape d'étranglement ou un clapet anti-retour avec étranglement, lequel relie au moins un des compartiments (44, ou 45, 45'; 46) avec l'atmosphère extérieure.

8. Robinet d'arrêt selon l'une des revendications précédentes, caractérisé en ce que le dispositif à ressorts (42; 43, 43') est formé d'au moins un ressort spiral.

9. Robinet d'arrêt selon la revendication 8, caractérisé en ce que plusieurs ressorts spiraux (42, 43, 43') sont prévus.
